(19) Europäisches Patentamt

European Patent Office

Office européen des brevets

(11) **EP 0 717 575 B1**

(12) **FASCICULE DE BREVET EUROPEEN**

(45) Date de publication et mention
de la délivrance du brevet:
**04.09.2002 Bulletin 2002/36**

(51) Int Cl.⁷: **H04Q 7/30**, H04B 7/26,
H04J 3/16

(21) Numéro de dépôt: **95202989.0**

(22) Date de dépôt: **06.11.1995**

(54) **Système de radio-communication avec station radio deportée**

Funk-Kommunikationssystem mit verteilten Feststationen

Radio communications system with remote base stations

(84) Etats contractants désignés:
**DE FR GB IT**

(30) Priorité: **15.11.1994 FR 9413640**

(43) Date de publication de la demande:
**19.06.1996 Bulletin 1996/25**

(73) Titulaire: **Koninklijke Philips Electronics N.V.
5621 BA Eindhoven (NL)**

(72) Inventeur: **Bellec, Martial, Société Civile S.P.I.D.
F-75008 Paris (FR)**

(74) Mandataire: **Chaffraix, Jean et al
Société Civile S.P.I.D.
156, Boulevard Haussmann
75008 Paris (FR)**

(56) Documents cités:
**EP-A- 0 539 265**     **EP-A- 0 562 494**
**EP-A- 0 617 522**

• ELECTRICAL COMMUNICATION, 1 Juillet 1993,
pages 172-180, XP000368136 WERBUS V ET AL:
**"DECT - CORDLESS FUNCTIONALITY IN NEW
GENERATION ALCATEL PABXS"**

**Description**

L'invention concerne un système de radio-communication comportant au moins une station radio destinée à être déportée par rapport à un concentrateur auquel elle est reliée par un canal, ladite station radio étant destinée à échanger par liaison radio, à un premier débit, des trames dites trames radio, et ledit canal étant destiné à véhiculer, à un second débit, des trames dites trames canal sur lesquelles lesdites trames radio sont multiplexées.

L'invention concerne également une station radio destinée à être utilisée dans un système de radio-communication afin d'échanger par liaison radio, à un premier débit, des trames dites trames radio, et comportant des moyens pour être reliée par un canal à un concentrateur dudit système, ledit canal étant destiné à véhiculer, à un second débit, des trames dites trames canal sur lesquelles lesdites trames radio sont multiplexées.

Enfin l'invention concerne également un concentrateur destiné à être utilisé dans un système de radio-communication en étant relié par un canal à au moins une station radio échangeant par liaison radio, à un premier débit, des trames dites trames radio, ledit canal étant destiné à véhiculer, à un second débit, des trames dites trames canal sur lesquelles lesdites trames radio sont multiplexées.

L'invention a d'importantes applications en radio-communications, notamment pour des applications dans lesquelles les stations radio doivent couvrir une zone géographique relativement large.

Le document EP-A- 0 539 265 divulgue un dispositif téléphonique perfectionné pour réseau de communication téléphonique à postes fixes et postes autonomes.

L'article "Système Hertzien de raccordement d'abonnés IRT 2000" de M. de Couesnongle. G. Floury et R. Tanguy, publié dans la revue commutation & transmission n°1, 1988, décrit un système dans lequel, conformément à ce qui a été exposé dans le paragraphe introductif, une station radio est déportée par rapport à une station radio centrale jouant le rôle de concentrateur.

Toutefois le fait de déporter une station radio de base, qui échange directement des trames radio avec des terminaux, en la reliant par un canal à un concentrateur pose un problème particulier, notamment dans des systèmes de radio-communication basés sur la norme DECT, pour des applications dans lesquelles les stations radio de base doivent couvrir une zone géographique relativement large, par exemple dans des applications de raccordement sans fil d'abonnés à un réseau public de télécommunications.

Dans ce cas en effet, la portée typique d'une station radio de base est 5 km (ce qui peut être considéré comme une longue portée par opposition notamment aux applications dites de télépoint permettant à un piéton de se déplacer à l'intérieur d'une zone, et pour lesquelles la portée maximum requise pour une station radio de base est de 200m).

Dans le cas des applications longue portée, les temps de transmission peuvent donner lieu à un certain retard aller-retour dans la réception des données, et un temps de garde entre les différents créneaux temporels de la trame DECT est prévu à cet effet par la norme.

Lorsqu'un système tel que décrit dans le paragraphe introductif est utilisé entre une station radio de base et un concentrateur, pour des applications nécessitant des stations radio de base de longue portée, le problème qui se pose est de minimiser le retard de mise en trame pour le transport sur le canal reliant le concentrateur et la station radio de base, de façon à maximiser le retard de transmission autorisé, et donc la portée des stations radio de base.

Pour cela, un système de radio-communication selon l'invention et tel que décrit dans le paragraphe introductif est caractérisé en ce que, ladite station radio étant une station radio de base destinée à échanger lesdites trames radio avec des terminaux et, le rapport entre lesdits premier et second débit étant égal à D1/D2, ladite station radio de base et ledit concentrateur comportent des moyens pour:

- lire les éléments binaires contenus dans les trames radio reçues,
- répartir, dans un groupe de D2 éléments binaires d'une trame canal, D1 éléments binaires d'une trame radio et D2-D1 éléments binaires destinés à être utilisés pour le codage d'informations d'exploitation,
- insérer un élément binaire de codage desdites informations d'exploitation à la suite d'un élément binaire de la trame radio lorsque la lecture de l'élément binaire suivant de la trame radio n'est pas achevée.

Dans un mode de réalisation particulièrement avantageux, lorsque le système de radio-communication selon l'invention est basé sur une architecture du type AMRT (Accès Multiple à Répartition dans le Temps) conformément à laquelle chaque créneau temporel de la trame radio est attribué à une liaison radio particulière, lesdites informations d'exploitation comportant notamment, dans le cas d'une transmission du concentrateur vers la station radio de base, des informations de commande de la liaison radio concernée, ladite station de base et ledit concentrateur comportent des moyens pour insérer les informations de commande d'une liaison radio correspondant à un créneau temporel k au plus tard dans les paquets de la trame canal qui correspondent au créneau temporel k-2.

Ainsi, les informations de commande de la liaison radio sont transmises en avance à la station radio de telle sorte que le synthétiseur dispose du temps nécessaire (au moins un créneau temporel) pour se préparer pour la transmission radio des éléments binaires des trames radio reçues (verrouillage sur la fréquence porteuse utilisée pour la transmission, choix de l'antenne...). Ce mode de réalisation présente l'avantage de permettre l'utilisation de synthétiseurs plus lents et donc moins coûteux au niveau de la station radio de base.

Dans un mode de réalisation particulièrement avantageux une station radio de base selon l'invention comporte donc deux synthétiseurs fonctionnant alternativement pour le traitement desdits créneaux temporels. L'utilisation alternative de deux synthétiseurs pour traiter les créneaux temporels successifs permet d'employer des synthétiseurs plus lents et donc d'un prix de revient inférieur, tout en autorisant l'utilisation de créneaux temporels successifs pour des transmissions (émission ou réception) sur des fréquences porteuses différentes.

D'autres particularités, détails et avantages de la présente invention apparaîtront dans la description qui va suivre en regard des dessins annexés qui sont donnés à titre d'exemple non limitatif et dans lesquels:

- la figure 1 représente schématiquement un système de radio-communication selon l'invention,
- la figure 2 est un schéma représentant l'interconnexion entre une station radio de base et un concentrateur,
- la figure 3-A représente une trame DECT,
- la figure 3-B représente une partie d'une trame canal,
- la figure 3-C représente schématiquement le multiplexage d'une trame radio (trame DECT) à 1,152Mbps sur une trame canal (trame câble) à 2,048Mbps,
- les figures 4-A et 4-B représentent une correction du glissement introduit par le décalage d'horloge entre le concentrateur et la station radio de base,
- les figures 5 est un schéma d'un module de traitement de trames d'un concentrateur selon l'invention,
- la figure 6 est d'un schéma d'un module de traitement de trames d'une station radio de base selon l'invention.

Dans la suite de la description on expose un système de radio-communication basé sur la norme DECT, mais il est bien entendu que l'invention est également applicable à d'autres types de système de radio-communication. Pour faciliter la compréhension de l'exposé, les notations utilisées par la suite reprendront dans la mesure du possible celles de la norme DECT.

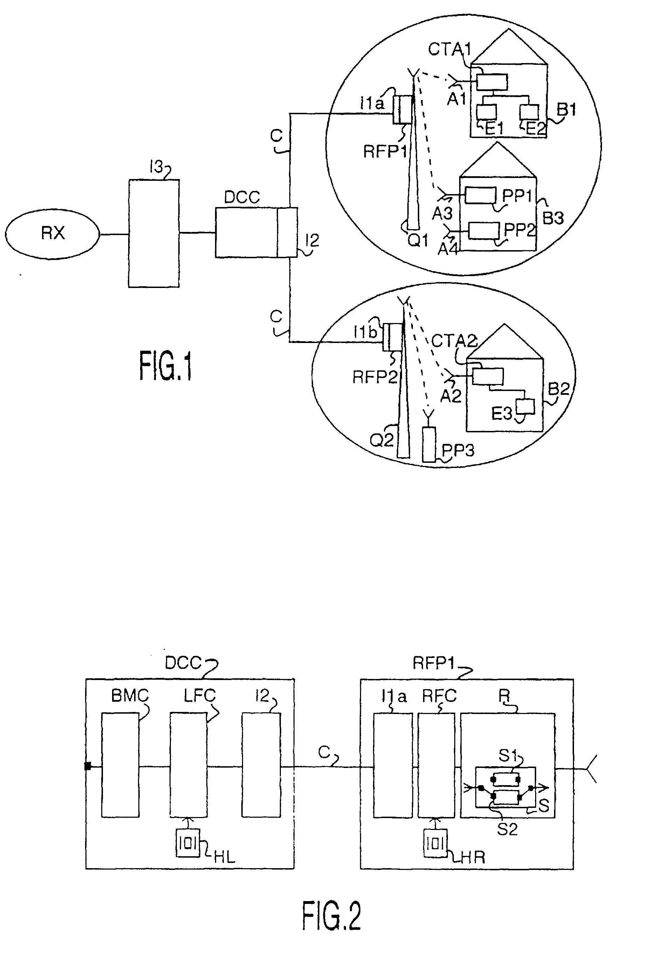

Un système de radio-communications selon l'invention est représenté sur la figure 1. D'une part il comporte deux terminaux fixes CTA1 et CTA2 installés dans deux bâtiments B1 et B2, munis chacun d'une antenne A1 et A2, et connectés à des équipements de transmission de parole (téléphones ou fac-similés par exemple) E1 et E2, et E3 respectivement. Les terminaux PP1 et PP2 sont des terminaux fixes dédiés au transfert de données qui sont installés dans un bâtiment B3 et qui sont munis d'une antenne A3 et A4 respectivement. Le terminal PP1 supporte les services RNIS et le terminal PP2 est un adaptateur Ethernet destiné à être relié à un réseau local sans fil de données de type Ethernet. Le terminal PP3, enfin, est un terminal portable supportant les services parole.

Un système de radio-communication selon l'invention comporte d'autre part deux stations radio de base RFP1 et RFP2 (de l'anglais Radio Fixed Part) respectivement installées en haut d'un pylône Q1 et Q2, et reliée à un concentrateur DCC (de l'anglais DECT Cluster controller) par un câble C au travers d'interfaces I1a et I2 d'une part, I1b et I2 d'autre part. Le concentrateur DCC est par ailleurs connecté par l'intermédiaire d'un module d'interface réseau I3 vers un réseau RX qui, pour des applications de transfert de parole, est par exemple un réseau public commuté, et pour des applications de transfert de données, un réseau de type Ethernet.

Une communication peut ainsi être établie entre la station radio de base RFP1 et les terminaux CTA1, PP1 et PP2 d'une part, et entre la station radio de base RFP2 et les terminaux CTA2 et PP3 d'autre part.

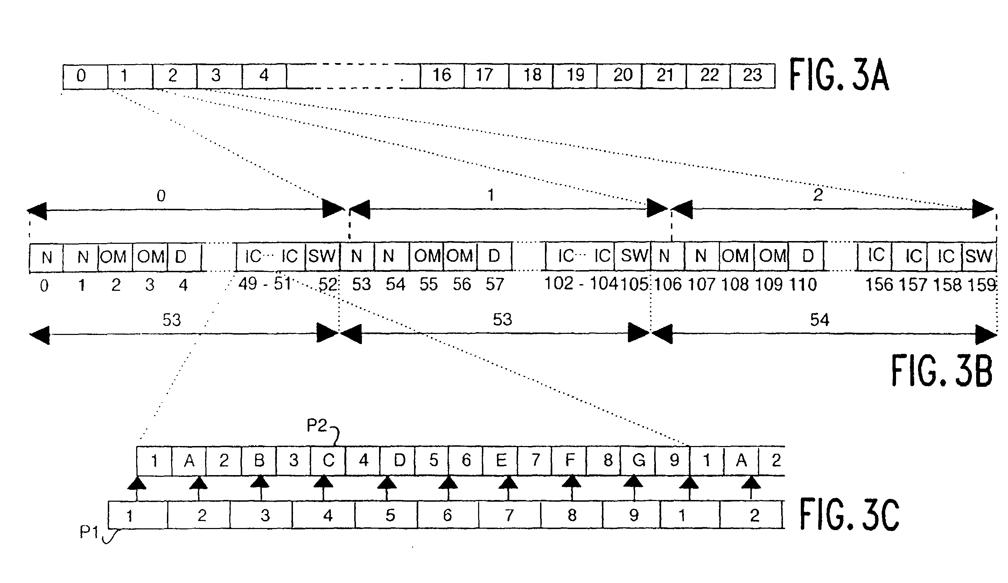

Avant de poursuivre la description il paraît nécessaire de rappeler succinctement les principes généraux de fonctionnement de la norme DECT. La norme DECT (ETS 300 175-2 de l'ETSI) prévoit, comme le montre la figure 3-A, que chaque trame DECT est divisée en 24 créneaux temporels de 10 ms chacun. Son débit est de 1,152Mbps, ce qui signifie que chaque créneau temporel correspond à 480 bits. Différentes structures de paquets DECT sont définies par la norme sous les références P00, P32 et P80. Ils contiennent respectivement 96 bits, 424 bits et 904 bits, de telle sorte qu'un créneau temporel de la trame DECT comporte un paquet P00, un paquet P32 et un demi paquet P80, un temps de garde de 56 bits étant ménagé pour les retard dus à la transmission dans les créneaux transportant des paquets DECT P32 et P80. Chaque paquet DECT est composé d'un chacp de synchronisation suivi d'un champ de données qui contient des bits de redondance pour la protection des données.

N'importe quel créneau temporel de la trame DECT peut être utilisé en émission ou en réception. Dans le cas des applications de parole, qui sont considérées comme symétriques au niveau volume de données échangées, on utilise de préférence des paquets P32, et chaque communication occupe en général deux créneaux temporels: le premier concerne les communications de la station radio de base vers le terminal fixe tandis que le second, 5ms plus tard dans la trame, transporte l'information dans le sens inverse. En revanche pour les applications de transfert de données qui génèrent des débits plus importants et qui sont le plus souvent asymétriques, il est possible d'utiliser en général des paquets P32 ou P80 et chaque communication est susceptible d'occuper un nombre de créneaux quelconque en émission et en réception.

Enfin, le spectre alloué au système DECT comporte actuellement 10 porteuses.

La figure 2 donne une représentation schématique de l'interface entre une station radio de base RFP1 et un concentrateur DCC qui sont chacun dotés d'une horloge HR et HL respectivement. Ils sont chacun reliés à un câble C d'un débit de 2,048Mbps par l'intermédiaire d'un module d'interface physique conforme à la recommandation G703 du CCITT, noté I1a et I2 respectivement. Ces modules d'interface G703 sont par exemple réalisés au moyen du circuit IPAT2 de Siemens. Le module d'interface I1a de la station radio de base RFP1 est relié à un module de traitement de trame RFC qui est lui-même relié à un émetteur-récepteur radio R comportant un synthétiseur S qui, dans cet exemple de réalisation est constitué de deux synthétiseurs S1 et S2 fonctionnant alternativement. Le rôle du module de traitement de trame RFC (de l'anglais Remote Frame Controller) est:

- en émission, de multiplexer les trames DECT à 1,152Mbps reçues par le récepteur radio R sur une trame 2,048Mbps destinée à être transmise sur le câble C, puis de coder la trame ainsi obtenue selon le code HDB3.
- et en réception de décoder la trame reçue du contrôleur de trame DCC puis de démultiplexer la trame à 2,048Mbps de façon à obtenir la trame DECT correspondante qui est ensuite transmise à l'émetteur radio R.

De façon similaire, le module d'interface I2 du concentrateur DCC est relié à un module de traitement de trames LFC (de l'anglais Local Frame Controller) qui est lui-même relié à un module BMC (de l'anglais Burst Mode Controller) de traitement de la trame DECT. Le rôle du module de traitement de trame LFC est:

- en réception, de décoder les données reçues sur l'interface I2, et de démultiplexer la trame 2,048Mbps en une trame DECT à 1,152Mbps,
- et en émission, de multiplexer une trame DECT reçue en provenance du module BMC sur une trame à 2,048 Mbps puis de la coder selon le code HDB3.

Le module BMC est réalisé, par exemple, à partir d'un circuit PCD504X fabriqué par Philips Semiconductors. Les principales fonctions de ce circuit sont les suivantes:

- multiplexage et démultiplexage des trames DECT à 1,152Mbps (c'est-à-dire essentiellement récupération du champ de synchronisation des paquets DECT, multiplexage des données, calcul des redondances cycliques sur ces données, et mémorisation des informations reçues du module LFC),
- traitement de la couche MAC du protocole DECT (c'est-à-dire essentiellement établissement, maintient et libération des canaux).

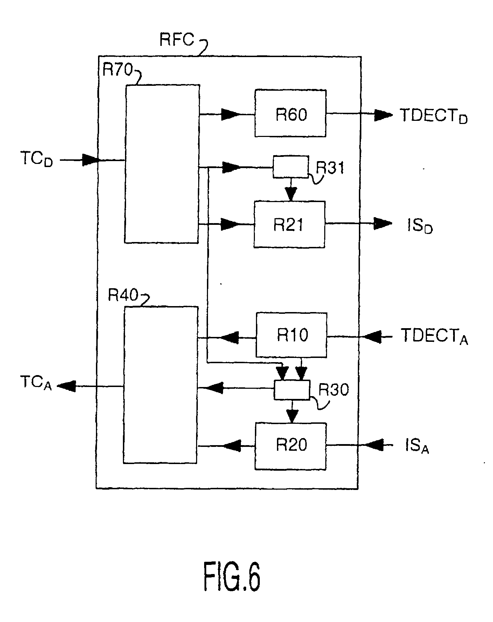

La figure 5 décrit de façon plus détaillée un module de traitement de trames LFC. Un tel module comporte d'une part:

- un circuit L10 de récupération de synchronisation qui reçoit en entrée des trames DECT notées $TDECT_D$ transmises par le module BMC et à destination de la station radio de base (l'indice D indique qu'il s'agit d'une trame descendante, c'est-à-dire transmise du concentrateur vers la station de base),
- un circuit L30 qui est une base de temps constituée à partir de trois compteurs, un compteur bit, un compteur créneau et un compteur trame. Ce circuit reçoit sur une première entrée des signaux d'horloge CLK correspondant à la synchronisation créneau et la synchronisation trame qui lui sont fournis par le module BMC, et sur une seconde entrée, en provenance du circuit L10, un signal de synchronisation bit.
- une mémoire L20 destinée à enregistrer des informations de signalisation notées $IS_0$ qui lui sont transmises par le module BMC et qui seront décrites dans la suite de l'exposé. Les informations de signalisation à transmettre dépendent du numéro de créneau courant dans la trame; la mémoire L20 lit donc le compteur créneau du circuit L30 pour déterminer les informations qu'elle doit transmettre,
- un circuit L40 de multiplexage des informations de signalisation qui lui sont fournies par la mémoire L20 et de la trame $TDECT_D$ qui lui est fournie par le circuit L10. Ce circuit L40 lit les compteurs du circuit L30 de façon à positionner successivement les informations de signalisation et les bits de la trame DECT aux emplacements appropriés dans la trame câble. Cette fonction de multiplexage est décrite plus en détails dans la suite de la description. Le circuit L40 délivre finalement une trame câble $TC_D$ qui est transmise sur le câble C à destination de la station radio de base.

Le module LFC comporte d'autre part:

- un circuit L70 de récupération de synchronisation et de démultiplexage qui reçoit en entrée une trame câble $TC_A$ en provenance de la station radio de base (l'indice A indique qu'il s'agit d'une trame ascendante transmise de la station radio de base vers le concentrateur),
- un circuit L31 qui génère une base de temps à partir des signaux d'horloge qui lui transmis par le circuit L70. Ce circuit est constitué à partir de trois compteurs, un compteur bit, un compteur créneau et un compteur trame.
- une mémoire L21 destinée à enregistrer des informations de signalisation $IS_A$ qui lui sont transmises par le circuit L70 et qui seront décrites dans la suite de l'exposé. Afin d'identifier les informations reçues, la mémoire L21 lit le compteur créneau du circuit L31,

-   une mémoire L60 qui enregistre la trame TDECT$_A$ qui lui est transmise par le circuit L70 afin de la transmettre au module BMC.

Enfin, le nodule LFC représenté sur la figure 5 comporte un circuit L50 qui est constitué à partir d'un compteur de délai aller-retour. Ce circuit accède d'une part à l'état du compteur de créneau du circuit L30 pour initialiser son compteur de délai aller-retour, et d'autre part à l'état du compteur de créneau du circuit L31 pour stopper son compteur de délai aller-retour. Le rôle de ce circuit sera expliqué dans la suite de la description.

La figure 6 décrit un module de traitement de trames RFC. Un tel module comporte d'une part:

-   un circuit R70 de récupération de synchronisation et de démultiplexage qui reçoit en entrée une trame câble TC$_D$ en provenance du concentrateur,
-   un circuit R31 qui génère une base de temps à partir des signaux d'horloge qui lui transmis par le circuit R70. Ce circuit est constitué à partir de trois compteurs, un compteur bit, un compteur créneau et un compteur trame,
-   une mémoire R21 destinée à enregistrer des informations de signalisation IS$_D$ qui lui sont transmises par le circuit R70 et qui seront décrites dans la suite de l'exposé. Afin d'identifier les informations reçues, la mémoire R21 lit le compteur créneau du circuit R31,
-   une mémoire R60 qui enregistre la trame TDECT$_D$ qui lui est transmise par le circuit R70 afin de la transmettre à l'émetteur-récepteur radio de la station radio de base.

Le module RFC comporte d'autre part:

-   un circuit R10 de récupération de synchronisation qui reçoit en entrée des trames DECT notées TDECT$_A$ transmises par un terminal et à destination du concentrateur,
-   un circuit R30 qui est une base de temps constituée à partir de trois compteurs, un compteur bit, un compteur créneau et un compteur trame. Ce circuit reçoit sur une première entrée des signaux d'horloge correspondant à la synchronisation créneau et la synchronisation trame qui lui sont fournis par le circuit R31, et . sur une seconde entrée, en provenance du circuit R10, un signal de synchronisation bit,
-   une mémoire R20 destinée à enregistrer des informations de signalisation notées IS$_A$, élaborées à partir de la trame TDECT$_A$ reçue en provenance du terminal et à partir de la trame TC$_D$ reçue en provenance du concentrateur, et décrites dans la suite de l'exposé. Les informations de signalisation à transmettre dépendent du numéro de créneau courant dans la trame; la mémoire R20 lit donc le compteur créneau du circuit R30 peur déterminer quelles informations doivent être transmises.

-   un circuit R40 de multiplexage des informations de signalisation qui lui sont fournies par la mémoire R20 et de la trame TDECT$_A$ qui lui est fournie par le circuit R10. Ce circuit L40 lit les compteurs du circuit L30 de façon à positionner successivement les informations de signalisation et les bits de la trame DECT aux emplacements appropriés dans la trame câble. Cette fonction de multiplexage est décrite plus en détails dans la suite de la description. Le circuit R40 délivre finalement une trame câble TC$_A$ qui est transmise sur le câble C à destination du concentrateur.

Dans cet exemple de réalisation, le canal utilisé pour relier la station radio de base au concentrateur est un câble à 2,048Mbps. Mais il est bien entendu que d'autre type de canaux peuvent également être utilisés.
La figure 3-C décrit le multiplexage d'une trame DECT à 1,152Mbps sur une trame câble à 2,048Mbps, tel qu'il est réalisé par les circuits L40 et R40. Le rapport D1/D2 entre ces deux débits (débit de la trame DECT sur débit de la trame câble) étant égal à 9/16, 16 bits de la trame câble correspondent à 9 bits de la trame DECT. Sur la figure 3-C on a représenté l'un en dessous de l'autre un groupe P2 de 16 éléments binaires (numérotés 1 à 9 et A à G) d'une trame câble et un groupe P1 de 9 éléments binaires (numérotés 1 à 9) d'une trame DECT. Les flèches partant de chaque bit du groupe P1 indiquent les instants auxquels la lecture du bit est achevée c'est-à-dire les instants à partir desquels le bit est disponible. Les bits A à G sont utilisés pour le codage des informations d'exploitation qui seront décrites dans la suite de l'exposé.
De façon à minimiser le retard de mise en trame, et donc à maximiser le retard de transmission aller-retour autorisé, les bits DECT sont insérés dans la trame câble dès qu'ils sont disponibles.
Ainsi, comme le montre la figure 3-C, le bit 1 est transmis dans le groupe P2 dès qu'il est disponible. Lorsque le bit 1 est transmis, le bit 2 n'est pas encore disponible. C'est donc le bit A qui est transmis en deuxième position dans le groupe P2. Le bit 2 est disponible au cours de la transmission du bit A et peut donc être transmis à sa suite, en troisième position dans le groupe P2. A la fin de la transmission in bit 2, le bit 3 n'est pas encore disponible, et c'est le bit B qui est transmis en quatrième position dans le groupe P2. Le bit 3 est disponible au cours de la transmission du bit B et peut donc être transmis à sa suite dans le groupe P2 en cinquième position. Le même raisonnement peut être suivi pour les bits C, 4, D et 5, qui sont donc respectivement transmis en sixième, septième, huitième et neuvième position dans le groupe P2. A la fin de la transmission du bit 5, le bit 6 est disponible. Il est donc transmis immédiatement en dixième position. Puis le raisonnement précédent peut être repris pour les bits suivants E, 7, F, 8, G et 9, qui sont respectivement transmis en onzième, douzième, treizième, quatorzième, quinzième et seizième position.

Ainsi, 9 éléments binaires 1 à 9 d'une trame DECT et 7 éléments binaires A à G destinés à être utilisés pour le codage des informations d'exploitation sont répartis dans un groupe de 16 éléments binaires d'une trame câble en insérant successivement un des 7 éléments binaires A à G à la suite d'un élément binaire 1 à 9, lorsque l'élément binaire suivant n'est pas disponible, c'est-à-dire lorsqu'il n'a pas encore été lu.

Les 7 éléments binaires A à G transmis dans chaque groupe P2 de 16 bits de la trame câble sont utilisés de deux façons différentes au cours de la transmission d'un créneau temporel DECT:

- d'une part, ils sont utilisés pour coder un mot de synchronisation de créneaux temporels, noté SW, et qui prend deux valeurs différentes selon qu'il s'agit d'un créneau temporel pair ou impair (0011011 ou 1100100). Ce mot de synchronisation est élaboré par les circuits L40 et R40.
- d'autre part, ils sont utilisés pour coder des informations IS de signalisation qui sont codées sur les quatre premiers bits A à D de chaque groupe P2, les trois bits suivants E à G constituant un code de redondance cyclique, de code de Hamming, protégeant les quatres premiers bits d'information A à D. Ces informations de signalisation sont constituées par:

  -> des informations OM d'opération et de maintenance,
  -> des informations IC de commande d'une liaison radio,
  -> un numéro N de créneau temporel.

Le numéro N de créneau temporel est un numéro modulo 24 (puisque chaque trame DECT comporte 24 créneaux temporels) transmis pour chaque créneau temporel de façon à assurer la synchronisation trame entre la station radio de base et le concentrateur. Il est fourni aux circuits L40 et R40 par les circuits L30 et R30 respectivement. Son codage se fait sur 2 groupes P2 de la trame câble (5 bits sont en effet nécessaires et chaque groupe P2 permet de véhiculer 4 bits d'informations d'exploitation).

On va maintenant décrire les informations OM d'opération et de maintenance et les informations IC de commande qui sont transmises dans les trames câble, en distinguant le cas des transmissions du concentrateur vers la station radio de base, appelées transmissions descendantes, et le cas des transmissions de la station radio de base vers le concentrateur, appelées transmissions ascendantes. Seules certaines informations qui apparaissent essentielles ou particulièrement intéressantes pour la mise en oeuvre de l'invention sont exposées ici à titre d'exemple. Il est bien entendu que d'autres informations peuvent également être transmises.

Dans le cas d'une transmission descendante, les informations OM d'opération et de maintenance sont transmises par le circuit L20 au circuit L40, et sont notamment constituées par une commande d'activation/ mise en veille de la station radio de base et du concentrateur, chacune codée sur 1 bit, les décisions d'activation ou de mise en état de veille étant prise par le module BMC. Le codage de cette information d'opération et de maintenance se fait donc sur 1 groupe P2 de la trame câble.

Dans le cas d'une transmission ascendante, les informations OM d'opération et de maintenance sont constituées par les informations suivantes:

- le niveau moyen du signal reçu par liaison radio pour chaque créneau temporel qui est codé sur 4 bits; cette information est échantillonnée à partir du signal reçu et enregistrée dans la mémoire R20, qui la fournit au circuit R40.
- diverses informations qui sont transmises pour certains créneaux temporels au moins; elles concernent des alarmes émises par la station de base et destinées à être transférées par le module LFC au module BMC pour traitement. Sont notamment transmis à ce titre:

  -> deux bits indiquant la qualité de la transmission câble descendante pendant la dernière seconde écoulée, c'est-à-dire le taux d'erreur binaire en ligne, qui est identifié par rapport à deux seuils: $10^{-5}$ et $10^{-3}$. A cet effet, les paquets erronés reçus sont détectés par vérification des 3 bits E à G de redondance cyclique. Ils sont alors comptabilisés, par incrémentation d'un compteur de 12 bits du circuit R31, sur une durée d'une seconde c'est-à-dire pour 100 trames DECT, et donc pour 128000 paquets P2. Ces deux bits permettent d'indiquer si la valeur du compteur est supérieure à 128, comprise entre 1 et 128 ou nulle. Ils sont transmis par le circuit R31 à la mémoire R20. Cette information d'opération et de maintenance permet de déclencher une action de maintenance, par exemple, une mise en veille de la station radio de base et/ou du concentrateur peut être commandée par le module BMC.
  -> deux bits indiquant respectivement une perte de synchronisation trame et créneau et qui sont transmis par le circuit R31 au circuit R30.
  -> deux bits, notés D, qui comme on le verra par la suite sont utilisés pour corriger un glissement susceptible d'apparaître au niveau bit entre les horloges HR et HL de la station radio de base et du concentrateur.

Les informations IC de commande de la liaison radio sont transmises dans le cas d'une transmission descendante uniquement, et sont fournies par le module BMC à la mémoire L20. Ces informations sont notamment constituées par:

- le type de paquet véhiculé dans le créneau temporel (P00, P32 ou P80); cette information est codée sur 2 bits,
- le sens de transmission (réception ou émission) codé sur 1 bit. En effet, si cette information peut se déduire directement de l'emplacement du créneau dans la trame pcur les applications symétriques telles que les applications de transfert de parole, il n'en va pas de même pour les applications asymétriques, notamment pour des applications de transfert de fichier, pour lesquelles n'importe quel créneau de la trame doit pouvoir être utilisé en émission ou en réception.
- l'état actif ou inactif du créneau codé sur 1 bit, qui permet d'indiquer si le créneau est ou non utilisé pour transmettre une communication.
- le numéro de l'antenne à utiliser puisque la norme prévoit un mécanisme de diversité d'antenne à partir de la station de base; cette information est codée sur 1 bit,
- le numéro de la fréquence porteuse à utiliser pour la liaison puisque la norme prévoit dix fréquences porteuses; ce numéro est codé sur 4 bits,
- et un bit qui lorsqu'il est actif pour un créneau temporel k, indique que le créneau temporel k+2 doit être considéré comme un créneau double, c'est-à-dire que les informations de commande de la liaison radio transmises pour le créneau k+2 restent valables pour le créneau temporel suivant k+3. Ce bit permet la transmission de paquets au format P80 défini par la norme pour des applications nécessitant un débit plus important que les applications de transfert de la parole, notamment pour des applications de transfert de données.

Le codage de ces informations se fait donc sur 3 groupes P2 de la trame câble. Toutefois, ces informations sont des informations urgentes en ce sens qu'elles doivent arriver à temps à la station radio de base de telle sorte que le synthétiseur de l'émetteur radio R soit prêt à transmettre lorsque la trame DECT est reçue par la station radio de base. Pour cela, les informations de commande de la liaison radio concernant le créneau k sont transmises avec les informations d'opération et de maintenance concernant le créneau k-2. Cette caractéristique permet de garantir le fonctionnement du système, même lorsque les synthétiseurs utilisés sont des synthétiseurs lents. Elle permet notamment d'utiliser deux synthétiseurs lents S1 et S2 au niveau des stations radio de base, fonctionnant de façon alternative pour la transmission des créneaux temporels successifs.

La structure des groupes P2 et la nature des informations codées par les 7 bits A à G ayant été exposées, on va maintenant décrire à l'aide de la figure 3-B la constitution de la trame câble.

La trame câble est constituée d'une succession de groupes P2; 160 de ces groupes numérotés 0 à 159 sont représentés sur la figure 3-B; ils correspondent aux créneaux 0, 1 et 2 de la trame DECT représentés sur la figure 3-A. Chaque créneau temporel de la trame DECT comportant 480 bits, 53 groupes P2 et 3 bits DECT sont nécessaires pour leur codage. La structure groupe de la trame câble coïncide donc avec la structure créneau de la trame DECT tous les 160 groupes, c'est-à-dire tous les 3 créneaux, formant ainsi un cycle de 53-53-54 groupes. Le mot de synchronisation créneau SW est transmis pour chaque créneau dans le dernier groupe plein précédant le début du créneau, c'est-à-dire dans les groupes 52, 105 et 159. Il permettent ainsi de retrouver la synchronisation créneau avec un décalage nul pour le créneau 0, un décalage de 3 bits DECT pour le créneau 1 et un décalage de 6 bits DECT pour le créneau 2.

D'autre part, les deux groupes qui suivent ce mot de synchronisation, c'est-à-dire les groupes 0 et 1, 53 et 54, 106 et 107, sont utilisés pour transmettre le numéro N du créneau c'est-à-dire 0, 1 et 2 dans cet exemple. Les groupes qui suivent ce numéro de créneau sont utilisés pour transmettre les informations OM d'opération et de maintenance descendantes ou ascendantes (à l'exception des bits D). Dans l'exemple décrit ici, 2 groupes sont nécessaires pour cette transmission, les groupes 2 et 3, 55 et 56, 108 et 109. Des groupes supplémentaires peuvent être nécessaires lorsqu'on transmet d'autres informations d'opération et de maintenance que celles exposées ci-dessus. Toutefois, il est important de noter que, pour les transmissions ascendantes, les 4 bits qui sont émis pendant le créneau k pour indiquer le niveau moyen du signal reçu par liaison radio concernent le niveau moyen du signal reçu pour le créneau k-2. Ce retard résulte des délais d'échantillonnage par le récepteur radio R du signal reçu, et du délai nécessaire à la mise en trame de l'information.

Pour les transmissions descendantes, les informations de commande IC de la liaison radio, relatives aux créneaux 2, 3 et 4 respectivement, sont transmises dans les trois groupes qui précèdent le mot de synchronisation des créneaux 1, 2 et 3, c'est-à-dire dans les groupes 49 à 51, 102 à 104, 156 à 158. En effet, les informations de commande de la liaison radio doivent être transmise à l'avance de telle sorte que le récepteur radio R soit prêt pour la transmission lorsqu'il reçoit la trame DECT.

Enfin, pour les transmissions ascendantes, les deux bits D sont transmis à la suite des autres informations d'opération et de maintenance dans les groupes 4, 57, et 110 respectivement.

Le rôle de ces deux bits D est le suivant. La norme G703 ne prévoit pas de fil pour la transmission de l'horloge entre les deux équipements extrémité du câble. L'horloge HR de la station radio de base est donc libre par rapport à celle HL du concentrateur de telle sorte qu'elle peut présenter un décalage en fréquence par rapport à cette dernière.

Or, pour les transmissions ascendantes, il n'est pas possible de filtrer, selon la méthode classique, au moyen d'une boucle à verrouillage de phase DPLL, la gigue introduite au niveau bit par la transmission et par la mise en trame, sans introduire un retard important. Les données reçues du terminal par la station radio de base sont donc échantillonnées à partir de l'horloge locale HR de la station radio de base. Ce problème ne se pose pas pour les rythmes trame et créneau dont la fréquence est beaucoup plus faible et qui peuvent donc être récupérés par la station radio de base à partir des données reçues du concentrateur. Autrement dit, pour les transmissions ascendantes, l'horloge HR de la station radio de base est donc maître au niveau bit et esclave de celle du concentrateur au niveau créneau et trame.

La longueur des bits émis par la station radio de base ne correspond donc pas forcément à celle des bits échantillonnés par le concentrateur, de telle sorte qu'au bout d'un certain temps, le concentrateur compte plus ou moins de bits qu'il n'en a été émis par la station radio de base. Un tel décalage au niveau bit peut être toléré tant que le glissement reste inférieur à un groupe P2 puisque les mécanismes de récupération de synchronisation trame et créneau au niveau du concentrateur ne descendent pas en deça du groupe P2. A titre d'exemple, si l'on considère que les horloges du concentrateur et de la station radio de base fonctionnent respectivement aux fréquences 18,432MHz et 18,432$\pm$50.10$^{-6}$MHz, le décalage en fréquence susceptible d'apparaitre est inférieur à 1000Hz, soit 10 bits pour 10ms (durée de la trame DECT). Chaque paquet trame correspondant à 16 bits, une correction apportée deux fois par trame DECT, c'est-à-dire toutes les 5ms, permet donc de garantir un glissement inférieur au demi-groupe.

Conformément à l'invention, la correction est effectuée de la façon suivante: la station radio de base compare ses instants d'émission aux instants de réception en provenance du concentrateur et en déduit le glissement entre les deux horloges. Toutes les demi trames, pour les créneaux 11 et 23 par exemple, la station radio de base décide:

- soit d'émettre normalement le 54$^{ème}$ groupe du cycle 53-53-54 s'il n'y a pas de glissement (D=00),
- soit de n'émettre que 53 groupes si le concentrateur est en avance d'au moins un demi groupe par rapport à la station radio de base (D=10),
- soit d'émettre un 55$^{ème}$ groupe supplémentaire s'il est en retard d'au moins un demi groupe (D=01),

et de transmettre la nature de la correction apportée, codée sur les deux bits D, au plus tard dans le créneau qui précède cette correction.

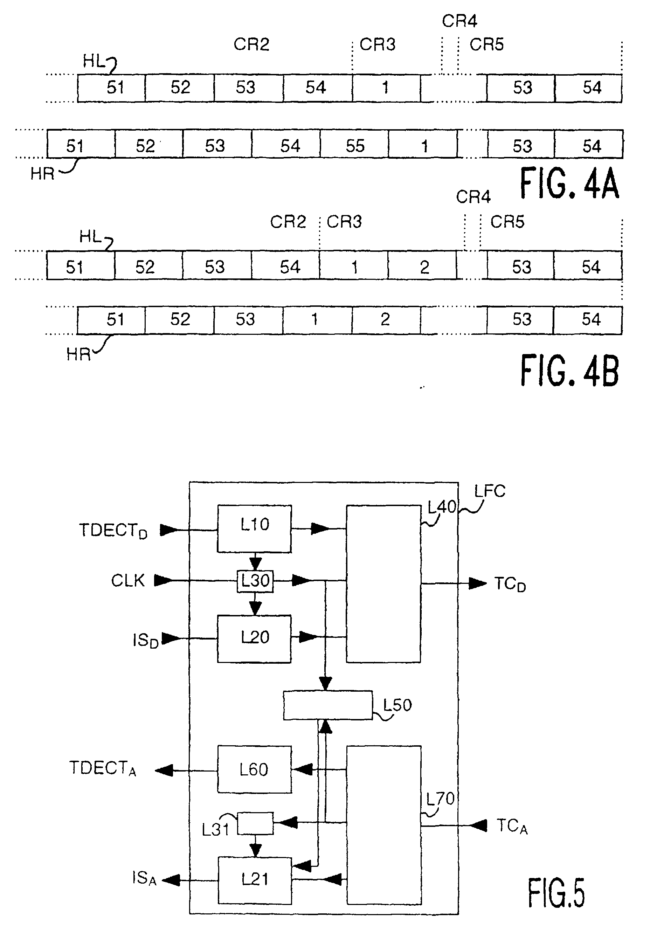

Les figures 4-A représente une correction apportée dans le cas où la fréquence de l'horloge HR de la station radio de base est supérieure à celle HL du concentrateur, le concentrateur étant par conséquent en retard d'un demi groupe par rapport à la station radio de base. Dans ce cas un groupe supplémentaire 55 est transmis de telle sorte qu'à la fin du cycle 53-53-54 suivant, c'est-à-dire à la fin de la transmission du créneau CR5 le décalage est compensé.

De même, la figure 4-B représente une correction apportée dans le cas où la fréquence de l'horloge HR de la station radio de base est inférieure à celle HL du concentrateur, le concentrateur étant par conséquent en avance d'un demi groupe par rapport à la station radio de base. Le groupe 54 du créneau CR2 est alors avalé par la station radio de base de telle sorte qu'à la fin du cycle 53-53-54 suivant, c'est-à-dire à la fin de la transmission du créneau CR5 le décalage est compensé.

Ces bits D vont par ailleurs être utilisés par le concentrateur pour calculer une grandeur appelée délai d'aller/retour sur le câble et qui permet d'évaluer la longueur du câble reliant le concentrateur à la station radio de base.

Le calcul de ce délai d'aller retour par le concentrateur est particulièrement important puisqu'il permet d'aligner les horloges des différentes stations radio de base reliées au concentrateur. En effet, ces stations sont en général à différentes distances du concentrateur, et les trames émises par le concentrateur leur arrivent donc avec différents retard dus à la traversée. Or lorsqu'un terminal doit changer de station radio de base, soit qu'il s'agisse d'un terminal mobile qui s'est déplacé d'une zone à une autre, soit qu'un mécanisme de changement de canal entre bornes tel que défini par la norme DECT ait été déclenché, pour que ce changement soit transparent à l'utilisateur, il ne faut pas qu'il ait à se resynchroniser au niveau trame et créneau sur la nouvelle station radio de base. Pour cela, il est important que le concentrateur puisse corriger avant l'émission des trames les différences d'instants de réception au niveau de chaque station radio de base. Cette correction se fait en avançant l'instant d'émission des trames à destination de chaque station radio de base en fonction du délai d'aller retour vers cette station: plus la station est éloignée, plus les trames seront émises tôt.

Pour calculer ce délai, il est classique de lancer un compteur, contenu dans le circuit L50, à l'émission d'un créneau donné et de l'arrêter à la réception dudit créneau. Toutefois ce mode de calcul ne tient pas compte d'un glissement possible entre les horloges de la station radio de base et du concentrateur. En effet, si cette mesure est effectuée sur un créneau qui comporte 53 ou 55 groupes au lieu de 54, elle sera faussée. Pour cela, conformément à l'invention, il est prévu de corriger l'instant d'arrêt dudit compteur en fonction de D. Ainsi, le délai d'aller/retour DAR s'exprime de la façon suivante:

$$DAR = TA + X - TL$$

où:

- X=T si D=10, X=-T si D=01 et X=0 si D=00
- T est égal au temps de transmission d'un groupe P2,
- TL est l'instant de lancement dudit compteur,
- TA est l'instant d'arrêt dudit compteur.

Bien que l'invention ait été décrite d'après un mode de réalisation particulier, il est bien entendu qu'elle n'est pas limitée à ce mode de réalisation. L'invention est notamment applicable à d'autres systèmes de radio-communication que le système DECT. Le déport de la station radio est réalisable par d'autres moyens que par un câble et à d'autres débits que ceux utilisés ici.

## Revendications

**1.** Système de radio-communication comportant au moins une station radio destinée à être déportée par rapport à un concentrateur auquel elle est reliée par un canal (C), ladite station radio étant destinée à échanger par liaison radio, à un premier débit, des trames dites trames radio, et ledit canal étant destiné à véhiculer, à un second débit, des trames dites trames canal sur lesquelles lesdites trames radio sont multiplexées,
    **caractérisé en ce que**, ladite station radio (RFP1, RFP2) étant une station radio de base destinée à échanger lesdites trames radio avec des terminaux (CTA1, CTA2, PP1, PP2, PP3) et, le rapport entre lesdits premier et second débit étant égal à D1/D2, ladite station radio de base (RFP1, RFP2) et ledit concentrateur (DCC) comportent des moyens pour:

- lire les éléments binaires contenus dans les trames radio reçues,
- répartir, dans un groupe de D2 éléments binaires d'une trame canal, D1 éléments binaires d'une trame radio et D2-D1 éléments binaires destinés à être utilisés pour le codage d'informations d'exploitation,
- insérer un élément binaire de codage desdites informations d'exploitation à la suite d'un élément binaire de la trame radio lorsque la lecture de l'élément binaire suivant de la trame radio n'est pas achevée.

**2.** Système de radio-communication selon la revendication 1, **caractérisé en ce que** lesdites informations d'exploitation sont notamment:

- des informations de synchronisation (SW) de la station radio de base (RFP1, RFP2) et du concentrateur (DCC),
- des informations (OM) d'opération et de maintenance,
- et, dans le cas d'une transmission du concentrateur (DCC) vers la station radio de base (RFP1, RFP2), des informations (IC) de commande de la liaison radio concernée.

**3.** Système de radio-communication selon la revendication 2 et basé sur une architecture du type AMRT (Accès Multiple à Répartition dans le Temps) conformément à laquelle chaque créneau temporel de la trame radio est attribué à une liaison radio particulière, **caractérisé en ce que** ladite station de base et ledit concentrateur comportent des moyens pour insérer les informations de commande d'une liaison radio correspondant à un créneau temporel k au plus tard dans les groupes de la trame canal qui correspondent au créneau temporel k-2.

**4.** Système de radio-communication selon la revendication 3, **caractérisé en ce que** ladite station radio de base comporte au moins deux synthétiseurs fonctionnant alternativement pour le traitement desdits créneaux temporels.

**5.** Système de radio-communication selon l'une des revendications 2 à 4, **caractérisé en ce que**, la station radio de base étant dotée d'une horloge (HR) oscillant librement par rapport à celle (HL) du concentrateur, elle comporte des moyens pour:

- évaluer régulièrement le décalage entre lesdites horloges,
- émettre un groupe supplémentaire de D2 éléments binaires si l'horloge du concentrateur est en retard d'au moins un demi groupe par rapport à celle de la station de base, et avaler un groupe si elle est en avance d'au moins un demi groupe, de façon à corriger ledit décalage,
- transmettre une information d'opération et de maintenance (D) au concentrateur pour lui indiquer le nombre de groupes transmis.

**6.** Système de radio-communication selon la revendication 5, basé sur une architecture du type AMRT conformément à laquelle la trame radio est divisée en créneaux temporels, **caractérisé en ce que** le concentrateur comporte des moyens (L50) pour élaborer une grandeur, dite délai d'aller/retour sur le canal (DAR), calculée à partir de la durée séparant l'instant d'émission d'un créneau temporel sur le canal et l'instant de réception dudit créneau temporel par le concentrateur, en tenant compte d'une éventuelle correction dudit décalage.

7. Système selon l'une des revendications 2 à 6, **caractérisé en ce que** les informations d'exploitation comportent en outre des informations de redondance permettant de détecter la réception de paquets erronés, et **en ce que** la station radio de base comporte des moyens pour élaborer une information d'opération et de maintenance, dite taux d'erreur canal, à partir du nombre de groupes erronés reçus, et pour la transmettre régulièrement au concentrateur.

8. Station radio destinée à être utilisée dans un système de radio-communication afin d'échanger par liaison radio, à un premier débit, des trames dites trames radio, et comportant des moyens pour être reliée par un canal à un concentrateur dudit système, ledit canal étant destiné à véhiculer, à un second débit, des trames dites trames canal sur lesquelles lesdites trames radio sont multiplexées,

   **caractérisé en ce que**, ladite station radio étant une station radio de base destinée à échanger des trames avec des terminaux, et le rapport entre lesdits premier et second débit étant égal à D1/D2, elle comporte des moyens pour:

   - lire les éléments binaires contenus dans les trames radio reçues,
   - répartir, dans un groupe de D2 éléments binaires d'une trame canal, D1 éléments binaires d'une trame radio et D2-D1 éléments binaires destinés à être utilisés pour le codage d'informations d'exploitation,
   - insérer un élément binaire de codage desdites informations d'exploitation à la suite d'un élément binaire de la trame radio lorsque la lecture de l'élément binaire suivant de la trame radio n'est pas achevée.

9. Concentrateur destiné à être utilisé dans un système de radio-communication en étant relié par un canal à au moins une station radio échangeant par liaison radio, à un premier débit, des trames dites trames radio, ledit canal étant destiné à véhiculer, à un second débit, des trames dites trames canal sur lesquelles lesdites trames radio sont multiplexées,

   **caractérisé en ce que**, ladite station radio étant une station radio de base destinée à échanger des trames avec des terminaux, et le rapport entre lesdits premier et second débit étant égal à D1/D2, il comporte des moyens pour:

   - lire les éléments binaires contenus dans les trames radio reçues,
   - répartir, dans un groupe de D2 éléments binaires d'une trame canal, D1 éléments binaires d'une trame radio et D2-D1 éléments binaires destinés à être utilisés pour le codage d'informations d'exploitation.

   - insérer un élément binaire de codage desdites informations d'exploitation à la suite d'un élément binaire de la trame radio lorsque la lecture de l'élément binaire suivant de la trame radio n'est pas achevée.

**Patentansprüche**

1. Funk-Kommunikationssystem mit mindestens einer Funkstation, dazu bestimmt, um in bezug auf einen Konzentrator verlagert zu werden, mit dem sie über einen Kanal (C) verbunden ist, wobei die besagte Funkstation dazu bestimmt ist, über Funkverbindung mit einer ersten Geschwindigkeit Raster, sogenannte Funkraster, auszutauschen, und der besagte Kanal dazu bestimmt ist, mit einer zweiten Geschwindigkeit Raster, sogenannte Kanalraster, zu befördern, auf denen die besagten Funkraster multiplexiert werden,

   **dadurch gekennzeichnet, dass** die besagte Funkstation (RFP1, RFP2) eine Basis-Funkstation ist, dafür bestimmt, die besagten Funkraster mit Terminals (CTA1, CTA2, PP1, PP2, PP3) auszutauschen, wobei das Verhältnis zwischen der besagten ersten und zweiten Geschwindigkeit gleich (D1/D2) ist, und die besagte Basis-Funkstation (RFP1, RFP2) und der besagte Konzentrator (DCC) Verfahren aufweisen, zum:

   - Lesen der binären Elemente, enthalten in den erhaltenen Funkrastern,
   - Aufteilen, in einer Gruppe von D2 binären Elementen, eines Kanalrasters, D1 binäre Elemente einer Funkrasters und D2-D1 binäre Elemente, dazu bestimmt, um für die Kodierung von Betriebsinformationen verwendet zu werden,
   - Einfügen eines binären Elements zur Kodierung der besagten Betriebsinformationen nach einem binären Element des Funkrasters, wenn das Lesen des binären Elements nach dem Funkraster nicht abgeschlossen ist.

2. Funk-Kommunikationssystem nach Anspruch 1, **dadurch gekennzeichnet, dass** die besagten Betriebsinformationen insbesondere sind:

   - Synchronisationsinformationen (SW) der Basis-Funkstation (RFP1, RFP2) und des Konzentrators (DCC),
   - Betriebs- und Wartungsinformationen (OM),
   - und, im Falle einer Übertragung vom Konzentrator (DCC) zur Basis-Funkstation (RFP1, RFP2) Steuerinformationen (IC) der betreffenden Funkverbindung.

3. Funk-Kommunikationssystem nach Anspruch 2, auf einer Architektur des Typs TDMA (Mehrfachzugriff im Zeitmultiplex) gründet, nach der jeder Zeitraum des Funkrasters einer besonderen Funkverbindung zugeteilt wird, **dadurch gekennzeichnet, dass** die besagte Basisstation und der besagte Konzentrator Verfahren enthalten, um die Steuerinformationen einer Funkverbindung entsprechend einem Zeitraum k spätestens in die Gruppen des Kanalrasters einzufügen, die dem Zeitraum k-2 entsprechen.

4. Funk-Kommunikationssystem nach Anspruch 3, **dadurch gekennzeichnet, dass** es mindestens zwei Synthetisierer enthält, die abwechselnd für die Bearbeitung der besagten Zeiträume arbeiten.

5. Funk-Kommunikationssystem nach einem der Ansprüche 2 bis 4, **dadurch gekennzeichnet, dass** die Basis-Funkstation mit einer in bezug auf die (HL) des Konzentrators frei schwingenden Uhr (HR) ausgestattet ist und Verfahren aufweist zum:

   - regelmäßigen Bewerten der Versetzung zwischen den besagten Uhren,
   - Senden einer zusätzlichen Gruppe mit D2 binären Elementen, wenn die Uhr des Konzentrators um mindestens eine halbe Gruppe in bezug auf die der Basisstation nachgeht, und Übergehen einer Gruppe, wenn sie um mindestens eine halbe Gruppe vorgeht, um die besagte Versetzung zu korrigieren,
   - Übertragung einer Betriebs- und Wartungsinformation (D) an den Konzentrator, um ihm die Anzahl übertragener Gruppen anzuzeigen.

6. Funk-Kommunikationssystem nach Anspruch 5, auf einer Architektur des Typs TDMA gründet, nach der das Funkraster in Zeiträume unterteilt wird, **dadurch gekennzeichnet, dass** der Konzentrator Verfahren (L50) enthält, um eine sogenannte Größe der Hin- und Rückverzögerung über den Kanal (DAR) aufzustellen, berechnet anhand der Dauer des Zeitpunkts, der das Senden eines Zeitraums über den Kanal vom Zeitpunkt des Empfangs des besagten Zeitraums beim Konzentrator trennt, unter Berücksichtigung einer eventuellen Versetzungskorrektur.

7. System nach einem der Ansprüche 2 bis 6, **dadurch gekennzeichnet, dass** die Betriebsinformationen zudem Redundanzinformationen enthalten, um den Erhalt von fehlerhaften Paketen erkennen zu können, und dass die Basis-Funkstation Verfahren aufweist, um eine Betriebs- und Wartungsinformation aufzustellen, die sogenannte Kanal-Fehlerquote, anhand der Anzahl erhaltener fehlerhafter Gruppen, und um sie regelmäßig an den Konzentrator zu übertragen.

8. Funkstation, für die Verwendung in einem Funk-Kommunikationssystem bestimmt, um über Funkverbindung mit einer ersten Geschwindigkeit Raster, sogenannte Funkraster, auszutauschen, und mit Verfahren, um über einen Kanal mit einem Konzentrator des besagten Systems verbunden zu werden, wobei der besagte Kanal dazu bestimmt ist, mit einer zweiten Geschwindigkeit Raster, sogenannte Kanalraster, zu befördern, auf denen die besagten Funkraster multiplexiert werden,

   **dadurch gekennzeichnet, dass** die besagte Funkstation eine Basis-Funkstation ist, dafür bestimmt, die besagten Funkraster mit Terminals auszutauschen, und das Verhältnis zwischen der besagten ersten und zweiten Geschwindigkeit gleich D1/D2 ist, und sie Verfahren aufweist, zum:

   - Lesen der binären Elemente, enthalten in den erhaltenen Funkrastern,
   - Aufteilen, in einer Gruppe von D2 binären Elementen, eines Kanalrasters, D1 binäre Elemente einer Funkrasters und D2-D1 binäre Elemente, dazu bestimmt, um für die Kodierung von Betriebsinformationen verwendet zu werden,
   - Einfügen eines binären Elements zur Kodierung der besagten Betriebsinformationen nach einem binären Element des Funkrasters, wenn das Lesen des binären Elements nach dem Funkraster nicht abgeschlossen ist.

9. Konzentrator, für die Verwendung in einem Funk-Kommunikationssystem bestimmt, um über die Verbindung eines Kanals mit mindestens einer Funkstation über Funkverbindung mit einer ersten Geschwindigkeit Raster, sogenannte Funkraster, auszutauschen, wobei der besagte Kanal dazu bestimmt ist, mit einer zweiten Geschwindigkeit Raster, sogenannte Kanalraster, zu befördern, auf denen die besagten Funkraster multiplexiert werden,

   **dadurch gekennzeichnet, dass** die besagte Funkstation eine Basis-Funkstation ist, dafür bestimmt, die besagten Funkraster mit Terminals auszutauschen, und das Verhältnis zwischen der besagten ersten und zweiten Geschwindigkeit gleich D1/D2 ist, und sie Verfahren aufweist, zum:

   - Lesen der binären Elemente, enthalten in den erhaltenen Funkrastern,
   - Aufteilen, in einer Gruppe von D2 binären Elementen, eines Kanalrasters, Dl binäre Elemente einer Funkrasters und D2-D1 binäre Elemente, dazu bestimmt, um für die Kodierung von Betriebsinformationen verwendet zu werden,

- Einfügen eines binären Elements zur Kodierung der besagten Betriebsinformationen nach einem binären Element des Funkrasters, wenn das Lesen des binären Elements nach dem Funkraster nicht abgeschlossen ist.

**Claims**

1. A radio communication system comprising at least a radio station intended to be displaced from a concentrator to which it is connected via a channel (C), said radio station is intended to exchange frames called radio frames by radio link at a first rate, and said channel is intended to transport, at a second rate, frames called channel frames on which said radio frames are multiplexed, **characterized in that** said radio station (RFP1,RFP2), being a radio base station intended to exchange said radio frames with terminals (CTA1,CTA2,PP1,PP2,PP3), and, with the ratio between said first and second rate being equal to D1/D2, said radio base station (RFP1,RFP2) and said concentrator (DCC) comprise means for:

   - reading the bits contained in the received radio frames,
   - distributing over a group of D2 bits of a channel frame, D1 bits of a radio frame and D2-D1 bits intended to be used for the coding of operational data,
   - inserting a code bit of said operational data after a bit of the radio frame when the next bit of the radio frame has not been read completely.

2. A radio communication system as claimed in Claim 1, **characterized in that** said operational data are particularly:

   - synchronization data (SW) for the synchronization of the radio base station (RFP1, RFP2) and the concentrator (DCC),
   - operational and maintenance data (OM),
   - and, in the case of a transmission from the concentrator (DCC) to the base station (RFP1, RFP2), control data (IC) for the radio link concerned.

3. A radio communication system as claimed in Claim 2 and based on an architecture of the TDMA type (Time-Division Multiple Access) in accordance with which each time slot of the radio frame is assigned to a particular radio link, **characterized in that** said radio base station and said concentrator comprise means for inserting the control data of a radio link that corresponds to a time slot k at the latest into the groups of the channel frame that correspond to the time slot k-2.

4. A radio communication system as claimed in Claim 3, **characterized in that** said radio base station comprises at least two synthesizers which operate alternately to process said time slots.

5. A radio communication system as claimed in one of the Claims 2 to 4, **characterized in that** the base station which has a clock (HR) that oscillates freely relative to that (HL) of the concentrator, comprises means for:

   - regularly evaluating the shift between said clocks,
   - transmitting an additional group of D2 bits if the clock of the concentrator lags behind by at least half a group relative to that of the base station, and swallowing a group if this clock leads by at least half a group, so as to correct said shift,
   - transmitting operational and maintenance data (D) to the concentrator to indicate thereto the number of transmitted groups.

6. A radio communication system as claimed in Claim 5, based on an architecture of the TDMA type in conformity with which the radio frame is subdivided into time slots, **characterized in that** the concentrator comprises means (L50) for processing a magnitude called return delay on the channel (DAR), calculated on the basis of the duration that separates the transmission instant of a time slot on the channel from the receiving instant of said time slot by the concentrator, while any possible correction of said shift is taken into account.

7. A system as claimed in one of the Claims 2 to 6, **characterized in that** the operational data further comprise redundancy data makes it possible to detect the reception of erroneous packets, and **in that** the radio base station comprises means for processing an operational and maintenance data, called channel error ratio, based upon the number of received erroneous groups and for regularly transmitting this operational and maintenance data to the concentrator.

8. A radio station intended to be used in a radio communication system for exchanging frames called radio frames by radio link at a first rate, and comprising means for being connected via a channel to a concentrator of said system, while said channel is intended to transport, at a second rate, frames called channel frames on which said radio frames are multiplexed, **characterized in that** said radio station being a base station intended to exchange frames with terminals and, when the ratio between first and second rate is equal to D1/D2, said base station and said concentrator comprise means for:

- reading the bits contained in the received radio frames,
- distributing over a group of D2 bits of a channel frame, D1 bits of a radio frame and D2-D 1 bits intended to be used for the coding of operational data,
- inserting a code bit of said operational data after a bit of the radio frame when the next bit of the radio frame has not been read completely.

9. A concentrator intended to be used in a radio communication system while being connected via a channel to at least one radio station that exchanges frames called radio frames by radio link at a first rate, while said channel is intended to transport, at a second rate, frames called channel frames on which said radio frames are multiplexed, **characterized in that** said radio station being a base station intended to exchange frames with terminals and, when the ratio between first and second rate is equal to D1/D2, said base station and said concentrator comprise means for:

- reading the bits contained in the received radio frames,
- distributing over a group of D2 bits of a channel frame, D1 bits of a radio frame and D2-D1 bits intended to be used for the coding of operational data,
- inserting a code bit of said operational data after a bit of the radio frame when the next bit of the radio frame has not been read completely.

FIG.1

FIG.2

EP 0 717 575 B1

FIG. 3A

| 0 | 1 | 2 | 3 | 4 | | . | 16 | 17 | 18 | 19 | 20 | 21 | 22 | 23 |

0     1     2

| N | N | OM | OM | D | | IC | IC | SW | N | N | OM | OM | D | | IC | IC | SW | N | N | OM | OM | D | | IC | IC | IC | SW |

0   1   2   3   4    49 - 51   52   53   54   55   56   57    102 - 104   105   106   107   108   109   110    156   157   158   159

53        53        54

FIG. 3B

P2

| 1 | A | 2 | B | 3 | C | 4 | D | 5 | 6 | E | 7 | F | 8 | G | 9 | 1 | A | 2 |

| 1 | 2 | 3 | 4 | 5 | 6 | 7 | 8 | 9 | 1 | 2 |

P1

FIG. 3C

FIG. 4A

FIG. 4B

FIG.5

FIG.6